# EUROPEAN PATENT APPLICATION

(11) **EP 3 239 847 A1**
(43) Date of publication of application: **01.11.2017**
(21) Application number: 17168595.1
(22) Date of filing: 28.04.2017
(51) Int. Cl.: G06F 12/0817, G06F 12/0831

(54) **DIRECTORY-BASED COHERENCE METHOD, NODE CONTROLLER, AND SYSTEM**

(30) Priority: 29.04.2016 CN 201610283694
(71) Applicant: Huawei Technologies Co., Ltd., Longgang District Shenzhen, Guangdong 518129 (CN)
(72) Inventor: Cheng, Yongbo, Shenzhen, Guangdong 518129 (CN); Lan, Kejia, Shenzhen, Guangdong 518129 (CN); He, Chenghong, Shenzhen, Guangdong 518129 (CN)
(74) Representative: Epping - Hermann - Fischer

(57) **Abstract**

Embodiments of the present invention provide a directory management method, a node controller, and a system, and relate to the field of computer technologies, so that utilization of the directory memory is effectively improved without changing a capacity of a directory memory, and impact caused by a directory overflow to processor performance is reduced. The directory management method includes: receiving, by a first NC, a first data access request sent by a first processor on a local node; if the first NC determines that a first directory does not include a directory entry corresponding to a first access address and the first directory does not include an idle directory entry, clearing, by the first NC, directory content of a directory entry from the first directory; writing, by the first NC, directory content corresponding to the first data access request to the cleared directory entry; and if the first NC determines that a first snoop request is received, sending, by the first NC, a first snoop message to the processor on the local node. Embodiments of the present invention are applied to a multiprocessor system.

## Description

### TECHNICAL FIELD

Embodiments of the present invention relate to the field of computer technologies, and in particular, to a directory management method, a node controller, and a system.

### BACKGROUND

In a cache coherence non-uniform memory access (Cache Coherence Non-Uniform Memory Access, CC-NUMA) system formed by high-performance central processing units (Central Processing Unit, CPU for simple in following description), because a limited expansion capability of a CPU, multiple CPUs in the CC-NUMA system need to be allocated to different nodes (Node), and then each NC (Node Controller, NC) performs CPU expansion, so as to increase a quantity of CPUs that can concurrently run, thereby improving performance of the CC-NUMA system.

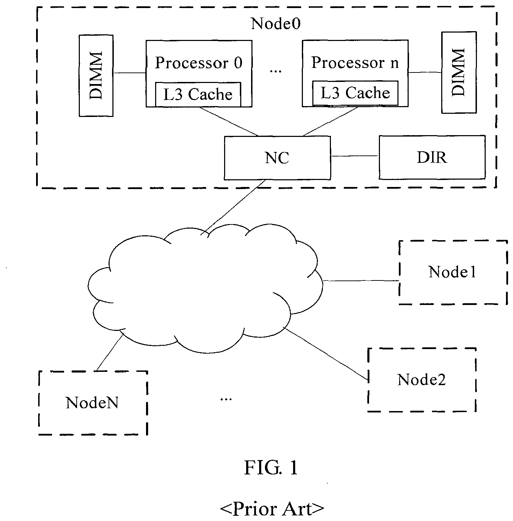

FIG. 1 shows a schematic diagram of an architecture of a simple CC-NUMA system. The CC-NUMA system shown in FIG. 1 includes a total of N+1 nodes (Node), which are respectively Node0 to NodeN. Each node includes one NC and n CPUs controlled by the NC. For example, the Node0 in FIG. 1 includes one NC and n processors, that is, processor 0 to processor n. Expansion is performed among the nodes by using NCs. Each CPU has a separate cache (Cache), for example, an L3 Cache (level 3 cache) shown in FIG. 1. In addition, memory expansion can be performed for each CPU. For example, memory expansion can be implemented, based on an original memory of the CPU, for a CPU by using a dual in-line memory module (Dual in-line memory module, DIMM) shown in FIG. 1.

In the CC-NUMA system shown in FIG. 1, because each CPU has an L3 Cache, and each CPU can perform memory expansion, a CPU on any node in the CC-NUMA system can perform coherent access on a memory of a CPU on another node in the CC-NUMA system.

Therefore, a directory memory is designed in each NC. A DIR (directory, Directory) designed as shown in FIG. 1 is stored in the directory memory, so that a status of memory data of a CPU on a node on which the NC is located is cached in a CPU on another node (that is, a node different from the node on which the NC is located, also referred to as a remote node), so as to maintain data consistency among different nodes. Generally, two levels of directories, that is, an LD (Local Directory) and an RD (Remote Directory), are designed on an NC to maintain data consistency together. The LD is used to record a status of memory data that is of a CPU on a local node and that is cached on a remote node, and the RD is used to record a status of memory data that is of another remote node and that is cached in a processor on a local node. For example, X data in a memory of a CPU on the Node0 is cached in a CPU on the Node1, an NC of the Node0 queries whether an LD managed by the NC includes an idle directory entry; if an idle directory entry is included, that the X data is cached on the Node1 is recorded in the idle directory entry in the LD, and a state (which may be a shared state or an exclusive state) of occupation of the X data by the CPU on the Node1 is identified in the LD by the NC of the Node0. In addition, an NC of the Node1 queries whether an RD managed by the NC includes an idle directory entry; if an idle directory entry is included, the NC of the Node1 records, in an idle directory entry in the RD managed by the NC, the one or more CPUs on the Node1 on which the foregoing X data is cached, and identifies an occupation state of the X data.

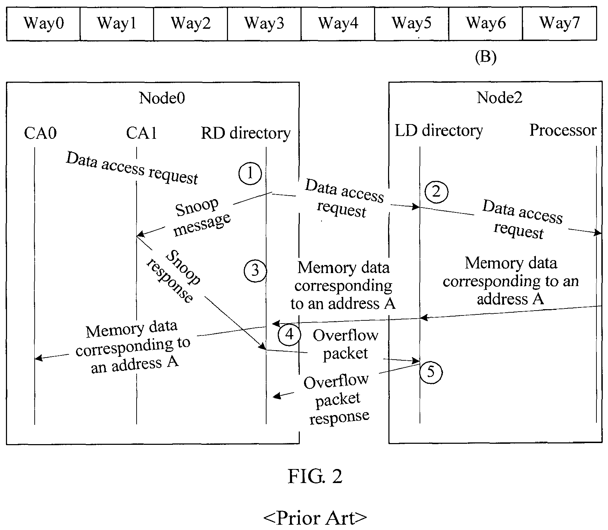

However, as shown in FIG. 2, on the Node0, a processor CA1 sends, to an NC, an access request for accessing target data of a remote node (for example, the Node0). The access request carries an address A of the target data. An NC0 of the Node0 forwards the data access request to an NC1 of the Node2, and the NC0 of the Node0 queries whether an RD managed by the NC includes an idle directory entry. If the NC0 determines that all directory entries in the RD managed by the NC0 are occupied, the NC0 selects an occupied directory entry from the RD managed by the NC0. After the NC0 obtains the target data from the Node2, the NC0 clears content of the selected directory entry. The NC1 of the Node2 sends, according to the address A, a request to a processor in which the address A is cached; the NC1 of the Node2 records, in an idle directory entry in an LD managed by the NC1, that the target data corresponding to the address A is cached on the Node0; and then the NC1 of the Node2 transfers the obtained target data to the NC0 of the Node0. The NC0 of the Node0 sends the target data to the processor CA1, the processor CA1 caches the target data in a memory of the processor CA1, and the NC0 of the Node0 records, in the directory entry whose content is cleared, information about the target data cached in the processor CA1. In the foregoing description, because the RD on the Node0 does not include an idle directory entry, to read and cache the target data, the NC0 has to clear an occupied directory entry in the RD managed by the NC0. Because the RD saves information about data that is of the remote node and that is cached on the local node, that is, an LD on the remote node includes a directory entry that is corresponding to a directory entry in the RD. If content of a directory entry in the RD on the Node0 is cleared, an entry error of content of a corresponding directory entry in the LD in the NC1 is caused. Therefore, when content of a directory entry in the RD on the Node0 (for example, the content records that memory data B in the NC1 is cached in a processor 2) is cleared, the NC0 of the Node0 needs to initiate invalid snooping to the processor 2 according to the content that is originally recorded in the cleared directory entry, so as to clear the memory data B cached in the processor 2. After determining that the memory data B is no longer cached in the processor 2, the NC0 of the Node0 sends an overflow packet to the NC1 of the Node2, where the overflow packet is used to indicate that the memory data B is no longer cached in the NC0 of the Node0. After receiving the overflow packet, the NC1 of the Node2 clears content cached on the Node0, where the content is of the memory data B and is recorded in the LD managed by the NC1.

Because cache structures of a processor cache and a directory cache are different, when a processor needs to use memory data and all directory entries in an RD are occupied, a collision may be caused if the memory data is cleared by an NC that manages the RD by sending a snoop message. For example, an RD usually uses a set-associative directory cache. In a set-associative directory RD design, data stored in a memory of a processor may be used for multiple times. When an NC selects to clear content of an occupied directory entry, because when the content of the directory entry is cleared, memory data indicated by the content also needs to be forcedly replaced in the NC by means of invalid snooping; and because the NC cannot learn a frequency at which the processor accesses the memory data in the memory and whether the memory data is still required in the processor, for the processor, a directory entry whose content is to be deleted is selected at random by the NC in a directory managed by the NC. However, if the cleared memory data is memory data that is being used by the processor or that needs to be used by the processor for multiple times, after being forcedly cleared, the memory data needs to be reloaded by the processor. During a period when the memory data is reloaded by the processor, a program operation is forced to be interrupted, thereby seriously affecting system performance.

### SUMMARY

Embodiments of the present invention provide a directory management method, a node controller, and a system, so as to effectively improve utilization of a directory memory without changing a capacity of the directory memory, and a memory data failure of a processor caused by clearing of content of a directory entry in the directory memory is less likely to occur.

To achieve the foregoing objective, the embodiments of the present invention use the following technical solutions:
According to a first aspect, an embodiment of the present invention provides a directory management method. The method is applied to a multiprocessor system. The multiprocessor system includes a local node and at least one remote node. A processor cache shared network is formed by using a data path between the local node and the remote node. The local node includes a first node controller NC, at least one processor, and a first directory used to record directory content of memory data that is of another remote node and that is cached in the processor on the local node. The directory management method provided in this embodiment of the present invention includes: receiving, by the first NC, a first data access request that is sent by a first processor on the local node and that is used to instruct to cache memory data corresponding to a first access address on the remote node, where the first processor is any processor on the local node; if the first NC determines that the first directory does not include a directory entry corresponding to the first access address and the first directory does not include an idle directory entry, clearing, by the first NC, directory content of a directory entry from the first directory; writing, by the first NC, directory content corresponding to the first data access request to the cleared directory entry; and if the first NC determines that a first snoop request that is used to instruct the first NC to clear, from the local node, the memory data corresponding to a second data access address is received, sending, by the first NC and to the processor on the local node, a first snoop message that is used to clear the memory data corresponding to the second data access address, where the memory data corresponding to the second data access address is cached in the processor on the local node.

With reference to the first aspect, in a first possible implementation manner of the first aspect, the first snoop request is sent by a first remote node. The first remote node is a remote node on which the memory data corresponding to the second data access address is located, directory content corresponding to the second data access address is included in a directory of the first remote node, and the directory content is used to indicate that the memory data corresponding to the second data access address is cached on the local node. Correspondingly, the sending, by the first NC, a first snoop message to the processor on the local node includes: if the first NC determines that the first snoop request is received after the first NC sends a second data access request to the first remote node, sending, by the first NC, the first snoop message to each processor on the local node other than a second processor, where the second processor is a processor on the local node that sends the second data access request to the first NC; or if the first NC determines that the first snoop request is not received after the first NC sends a second data access request to the first remote node, sending, by the first NC, the first snoop message to each processor on the local node.

With reference to the first possible implementation manner of the first aspect, in a second possible implementation manner of the first aspect, before it is determined that the first snoop request sent by the first remote node is received, the method further includes: receiving, by the first NC, the second data access request that carries a second data access address and an access type and that is sent by the second processor; and if it is determined that the second data access request is an exclusive request and the first directory does not include a directory entry corresponding to the second data access address, selecting, by the first NC, an idle directory entry in the first directory to record directory content corresponding to the second data access request, and sending the exclusive request to the first remote node, where the exclusive request is used to instruct to: when a second NC of the first remote node determines that a second directory includes a directory entry corresponding to the second data access address, and directory content of the directory entry indicates that the memory data corresponding to the second data access address is cached on the local node, send the first snoop request to the local node, the second directory is a directory managed by the second NC of the first remote node, and the second directory is used to record a status of memory data that is of the remote node and that is cached on the local node.

With reference to the first aspect, in a third possible implementation manner of the first aspect, the determining that a first snoop request is received includes: receiving, by the first NC, a second data access request sent by a third processor on the local node, where the second data access request includes a second data access address and an access type; and if the first NC determines that the second data access request is an exclusive request, the first directory includes directory content corresponding to the second data access address, and the directory content indicates that the memory data corresponding to the second data access address is in a shared state, determining, by the first NC, that the first snoop request is received.

With reference to the third possible implementation manner of the first aspect, in a fourth possible implementation manner of the first aspect, the sending, by the first NC, a first snoop message to the processor on the local node includes: determining, by the first NC according to the directory content corresponding to the second data access address in the first directory, a processor that is on the local node and that caches the memory data corresponding to the second data access address; and sending, by the first NC, the first snoop message to each processor that is on the local node and that caches the memory data corresponding to the second data access address.

With reference to the first aspect, in a fifth possible implementation manner of the first aspect, the method further includes:
receiving, by the first NC, a third data access request that is used to write back the memory data corresponding to the second data access address and that is sent by a second processor; and sending, by the first NC, the third data access request to a first remote node, so that the first remote node writes back, according to the third data access request, the memory data corresponding to the second data access address to a processor in which the memory data corresponding to the second data access address is located, and clearing, from a second directory, directory content corresponding to the second data access address.

According to a second aspect, an embodiment of the present invention provides a directory management method. The method is applied to a multiprocessor system. The multiprocessor system includes a local node and at least one remote node. A processor cache shared network is formed by using a data path between the local node and the remote node. The remote node includes a second node controller NC and a second directory. The second directory is used to record a status of memory data that is of the remote node and that is cached on the local node. The method includes: receiving, by the second NC, a second data access request that carries a second data access address and an access type; and if the second NC determines that the second data access request is an exclusive request, the second directory includes directory content corresponding to the second data access address, and the directory content corresponding to the second data access address indicates that memory data corresponding to the second data access address is in a shared state, sending, by the second NC, a first snoop request to the local node on which the memory data corresponding to the second data access address is cached, where the first snoop request is used to instruct the first NC to clear memory data corresponding to a first access address on the local node.

With reference to the second aspect, in a first possible implementation manner of the second aspect, the method further includes: receiving, by the second NC, a third data access request that is used to write back the memory data corresponding to the second data access address and that is sent by the local node, and if the second NC determines that the second directory includes directory content corresponding to the second data access address, clearing, by the second NC and from the second directory, the directory content corresponding to the second data access address, and writing back the memory data corresponding to the second data access address to a first processor, where the first processor is a processor in which the memory data corresponding to the second data access address is located.

According to a third aspect, an embodiment of the present invention further provides a node controller, including:
a first receiving unit, configured to receive a first data access request sent by a first processor on the local node, where the first data access request is used to instruct to cache memory data corresponding to a first access address on the remote node, and the first processor is any processor on the local node; a first judging unit, configured to: when it is determined that the first directory does not include a directory entry corresponding to the first access address, determine whether the first directory includes an idle directory entry; a clearing unit, configured to: when the first judging unit determines that the first directory does not include an idle directory entry, clear directory content of a directory entry from the first directory; a writing unit, configured to write directory content corresponding to the first data access request to the cleared directory entry; a second judging unit, configured to determine whether a first snoop request is received; and a sending unit, configured to: when the second judging unit determines that the first snoop request is received, send a first snoop message to the processor on the local node, where the first snoop message is used to clear memory data corresponding to the second data access address, the first snoop request is used to instruct the first NC to clear, from the local node, the memory data corresponding to the second data access address, and the memory data corresponding to the second data access address is cached in the processor on the local node.

With reference to the third aspect, in a first possible implementation manner of the third aspect, the first snoop request is sent by a first remote node. The first remote node is a remote node on which the memory data corresponding to the second data access address is located, directory content corresponding to the second data access address is included in a directory of the first remote node, and the directory content is used to indicate that the memory data corresponding to the second data access address is cached on the local node. The sending unit includes: a first judging module, configured to determine whether the first snoop request is received after the first NC sends a second data access request to the first remote node; a first sending module, configured to: when the first judging module determines that the first snoop request is received after the first NC sends a second data access request to the first remote node, send the first snoop message to each processor on the local node other than a second processor, where the second processor is a processor on the local node that sends the second data access request to the first NC; and a second sending module, configured to: when the first judging module determines that the first snoop request is not received after the first NC sends a second data access request to the first remote node, the first snoop message to each processor on the local node.

With reference to the first possible implementation manner of the third aspect, in a second possible implementation manner of the third aspect, the node controller further includes: a second receiving unit, configured to receive the second data access request sent by the second processor, where the second data access request carries a second data access address and an access type; a third judging unit, configured to determine whether the second data access request is an exclusive request and whether the first directory does not include a directory entry corresponding to the second data access address; and an execution unit, configured to: when the third judging unit determines that the second data access request is an exclusive request and the first directory does not include a directory entry corresponding to the second data access address, select an idle directory entry in the first directory to record directory content corresponding to the second data access request, and send the exclusive request to the first remote node, where the exclusive request is used to instruct to: when an NC of the first remote node determines that a second directory includes a directory entry corresponding to the second data access address, and directory content of the directory entry indicates that the memory data corresponding to the second data access address is cached on the local node, send the first snoop request to the local node, where the second directory is a directory managed by the NC of the first remote node, and the second directory is used to record a status of memory data that is of the remote node and that is cached on the local node.

With reference to the third aspect, in a third possible implementation manner of the third aspect, the second judging unit includes: a receiving module, configured to receive a second data access request sent by a third processor on the local node, where the second data access request includes a second data access address and an access type; a second judging module, configured to determine whether the second data access request is an exclusive request and whether the first directory includes directory content corresponding to the second data access address; and a determining module, configured to: when the second judging module determines that the second data access request is an exclusive request, the first directory includes directory content corresponding to the second data access address, and the directory content indicates that the memory data corresponding to the second data access address is in a shared state, determine that the first snoop request is received.

With reference to the third possible implementation manner of the third aspect, in a fourth possible implementation manner of the third aspect, the sending unit includes: a determining module, configured to determine, according to the directory content corresponding to the second data access address in the first directory, a processor that is on the local node and that caches the memory data corresponding to the second data access address; and a third sending module, configured to send the first snoop message to each processor that is on the local node and that caches the memory data corresponding to the second data access address.

With reference to the third aspect, in a fifth possible implementation manner of the third aspect, the node controller further includes: a third receiving unit, configured to receive a third data access request that is used to write back the memory data corresponding to the second data access address and that is sent by a second processor; and the sending unit is further configured to send the third data access request to a first remote node, so that the first remote node writes back, according to the third data access request, the memory data corresponding to the second data access address to a processor in which the memory data corresponding to the second data access address is located, and clear, from a second directory, directory content corresponding to the second data access address.

According to a fourth aspect, an embodiment of the present invention further provides a node controller. The node controller includes: a first receiving unit, configured to receive a second data access request, where the first data access request carries a first access address and an access type; a judging unit, configured to determine whether the second data access request is an exclusive request, whether the first directory includes directory content corresponding to the first access address and whether the directory content corresponding to the first access address indicates that memory data corresponding to the first access address is in a shared state; and a sending unit, configured to: if the judging unit determines that the second data access request is an exclusive request, the first directory includes directory content corresponding to the first access address, and the directory content corresponding to the second data access address indicates that the memory data corresponding to the second data access address is in a shared state, send a first snoop request to a local node on which the memory data corresponding to the second data access address is cached, where the first snoop request is used to instruct a first NC to clear, from the local node, the memory data corresponding to the second data access address.

With reference to the fourth aspect, in a first possible implementation manner of the fourth aspect, the node controller further includes a second receiving unit and a clearing unit. The second receiving unit is configured to receive a third data access request that is used to write back the memory data corresponding to the second data access address and that is sent by the local node. The judging unit is further configured to determine whether a second directory includes directory content corresponding to the second data access address. The clearing unit is configured to: when the judging unit determines that the second directory includes directory content corresponding to the second data access address, clear, from the second directory, the directory content corresponding to the second data access address, and write back the memory data corresponding to the second data access address to a first processor, where the first processor is a processor in which the memory data corresponding to the second data access address is located.

According to a fifth aspect, an embodiment of the present invention further provides a multiprocessor system. The multiprocessor system includes a local node and at least one remote node. A node controller of the local node is the node controller provided in any one of the third aspect, or the first to the fifth possible implementation manners of the third aspect in the embodiments of the present invention, and a node controller of the remote node is the node controller provided in the fourth aspect or the first possible implementation manner of the four aspect.

According to the directory management method provided in the embodiments of the present invention, when a first data access request sent by a first processor on a local node is received, and it is determined that a first directory does not include a directory entry corresponding to a first access address and the first directory does not include an idle directory entry, the first NC clears directory content of a directory entry from the first directory, and writes directory content corresponding to the first data access request to the cleared directory entry. According to the method provided in the embodiments of the present invention, utilization of the first directory is effectively improved without changing a capacity of the first directory, and in addition, after the directory content of the selected directory entry is cleared, the first NC of the local node does not directly delete memory data that is indicated by an access address, where the access address is indicated by the directory content of the selected directory entry; instead, the first NC deletes, after receiving a first snoop request, the memory data indicated by the directory content of the selected directory entry. That is, when the directory content of the selected directory entry is deleted, the first NC does not immediately delete the memory data indicated by the directory content of the selected directory entry. Therefore, when the directory content of the memory data is cleared from the first NC, a processor in which the memory data indicated by the directory content of the selected directory entry is cached can continuously use the memory data before the first NC receives the first snoop request, so that when the processor uses the memory data, forced program interruption caused by forced deletion of the memory data is avoided, and impact caused by an overflow of the first directory to processor performance can be reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an architecture of a system in which a directory management method provided in the prior art is applied;
FIG. 2 is a schematic flowchart of a directory management method provided in the prior art;
FIG. 3 is a first schematic flowchart of a directory management method according to an embodiment of the present invention;
FIG. 4A to FIG. 4B are a second schematic flowchart of a directory management method according to an embodiment of the present invention;
FIG. 5A to FIG. 5C are a third schematic flowchart of a directory management method according to an embodiment of the present invention;
FIG. 6A to FIG. 6C are a fourth schematic flowchart of a directory management method according to an embodiment of the present invention;
FIG. 7A to FIG. 7C are a fifth schematic flowchart of a directory management method according to an embodiment of the present invention;
FIG. 8 is a first schematic structural diagram of a node controller according to an embodiment of the present invention;
FIG. 9 is a second schematic structural diagram of a node controller according to an embodiment of the present invention; and
FIG. 10 is a schematic structural diagram of another node controller according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

Principles of the embodiments of the present invention are as follows:
As shown in FIG. 2, in the prior art, an inclusive policy means that when a CPU on a local node accesses memory data of a CPU on a remote node, directory content corresponding to the memory data is recorded in an RD on the local node. When a copy of the memory data of the remote node is cached in any CPU on the local node, a corresponding directory entry is definitely included in the RD on the local node. Directory content of the directory entry is used to indicate a processor or processors that is/are on the local node and that caches/cache the memory data of the remote node. A corresponding directory entry is definitely included in an LD on the remote node. Directory content of the directory entry indicates that the memory data is cached on the local node. For example, a processor CA1 on the local node accesses memory data corresponding to an address A, directory content recorded in a directory entry in the RD on the local node is that the processor CA1 has accessed the memory data corresponding to the address A, and a node on which the memory data corresponding to the address A is a remote node. Directory content recorded by a node controller of the remote node in a directory entry in the LD that is managed by the node controller is that the memory data corresponding to the address A is cached on the local node (for example, a Node0).

Certainly, when a state of the memory data corresponding to the address A in the RD is a shared state, the memory data corresponding to the address A may be cached in at least one processor on the local node. Certainly, in this case, a processor or processors in which the memory data is cached is/are clearly recorded in the RD.

In the prior art, an RD generally uses a set-associative directory cache, for example, an eight-way set-associative directory cache. As shown in FIG. 2, the eight ways in the eight-way set-associative directory cache are Way0, Way1, Way2, Way3, Way4, Way5, Way6, and Way7. When a node controller of a node Node0 receives a data access request sent by a processor CA0 on the Node0, the data access request carries an address A, and an access type of the access request is a shared request. Because an RD on the Node0 does not include a directory entry corresponding to the data access request, and all the eight ways in the RD cache are valid, a directory entry that needs to be replaced can be determined according to a preset directory replacement policy. For example, a pseudo LRU (least recently used, Least Recent Used) algorithm can be used, and seven LRU location identifiers are used, that is, R0, R1, R2, R3, R4, R5, and R6, to determine a way pointing to the directory entry that needs to be replaced. A specific replacement algorithm is as follows:
If R0=0, R1=0, and R3=0, Way0 is replaced;
if R0=0, R1=0, and R3=1, Way1 is replaced;
if R0=0, R1=1, and R4=0, Way2 is replaced;
if R0=0, R1=1, and R3=1, Way3 is replaced;
if R0=1, R2=0, and R5=0, Way4 is replaced;
if R0=1, R2=0, and R5=1, Way5 is replaced;
if R0=1, R2=0, and R6=0, Way6 is replaced; or
if R0=1, R2=0, and R6=1, Way7 is replaced.

It is assumed that when performing replacement, a node controller of the local node selects, according to the preset replacement policy, to replace the Way6, where the Way6 points to a directory entry in which directory content corresponding to an address B is stored. The node controller needs to obtain a directory entry from the RD, and clears directory content of the directory entry, so that the directory entry can be used to store directory content corresponding to the address A. For example, when the directory replacement policy selects to replace the directory entry that is used to store the directory content corresponding to the address B, in this case, the node controller of the Node0 needs to initiate invalid snooping to the CA1 according to the recorded directory content corresponding to the address B, so as to clear memory data that is corresponding to the address B and that is cached in the CA1.

However, the Node0 cannot learn a frequency of accessing the memory data in the memory in the CA1 by the CA1 and whether the memory data is still needed in the CA1. Therefore, for any processor on the Node0, a directory entry that is obtained by the Node0 by using the preset directory replacement policy and that needs to be replaced may be selected at random. After the memory data cached in the CA1 is forcedly replaced, when the CA1 needs to use the memory data, the memory data needs to be reloaded. During a period when the CA1 reloads the memory data, a program operation is forced to be interrupted, thereby seriously affecting system performance. Therefore, the directory management method provided in this embodiment of the present invention is applied to a multiprocessor system. The multiprocessor system includes a local node and at least one remote node. A processor cache shared network is formed by using a data path between the local node and the remote node. The local node includes a first node controller NC, at least one processor, and a first directory. The first directory is used to record directory content that is of memory data of another remote node and that is cached in the processor on the local node. In the directory management method, a first data access request sent by a first processor on the local node is received by the first NC, where the first data access request is used to instruct to cache memory data corresponding to a first access address on the remote node and the first processor is any processor on the local node; if the first NC determines that the first directory does not include a directory entry corresponding to the first access address and the first directory does not include an idle directory entry, the first NC clears directory content of a directory entry from the first directory; the first NC writes directory content corresponding to the first data access request to the cleared directory entry; and if the first NC determines that a first snoop request is received, the first NC sends a first snoop message to the processor on the local node, where the first snoop message is used to clear memory data corresponding to the second data access address, the first snoop request is used to instruct the first NC to clear, from the local node, the memory data corresponding to the second data access address, and the memory data corresponding to the second data access address is cached in the processor on the local node. According to the method provided in this embodiment of the present invention, utilization of the first directory is effectively improved without changing a capacity of the first directory. In addition, after directory content of a cleared directory entry is cleared, memory data indicated by the first address is not deleted directly; instead, memory data indicated by the directory content of the cleared directory entry is deleted after a first NC receives a first snoop request. Therefore, when the directory content of the memory data is cleared from the first NC, a processor in which the memory data indicated by the directory content of the cleared directory entry is cached can continuously use the memory data before the first NC receives the first snoop request, so that forced program interruption is avoided, and impact caused by an overflow of the first directory to processor performance is reduced.

Referring to FIG. 1, FIG. 1 is a diagram of an architecture of a network in which a directory management method according to an embodiment of the present invention is applied. In this embodiment of the present invention, the multiprocessor system includes N+1 nodes, where N≥1. A processor cache shared network is formed by using a data path between one node and another node. All the nodes have a same structure, and the node includes n+1 (n≥0) CPUs. A corresponding memory and cache are disposed for each CPU, and each CPU is connected to a node controller of a node. A directory memory is disposed for the node controller, and the directory memory includes multiple directory entries. The multiple directory entries are stored in at least one area of the directory memory. Each directory entry uses a memory address as an index to record a storage state and a storage location that are of memory data corresponding to the memory address. A memory on each node may be a separate memory disposed for each CPU in FIG. 1, or may be a shared memory. Each CPU on the node is responsible for managing a specified address range. This is not limited in this embodiment of the present invention.

A storage state in a directory entry includes an exclusive state, a shared state, and an invalid state. The exclusive state means that only one cache of a node includes cached data, and the cached data is inconsistent with memory data in a memory. The shared state means that caches of one or more nodes include cached data, and the cached data is consistent with memory data in a memory. The invalid state means that no cache of a node includes cached data.

To facilitate clear description of the technical solutions in the embodiments of the present invention, words such as "first", "second" and "third" are used in the embodiments of the present invention to distinguish between the same items or similar items that provide basically the same functions or purposes. A person skilled in the art may understand that the words such as "first", "second" and "third" do not restrict the quantity and the implementation order.

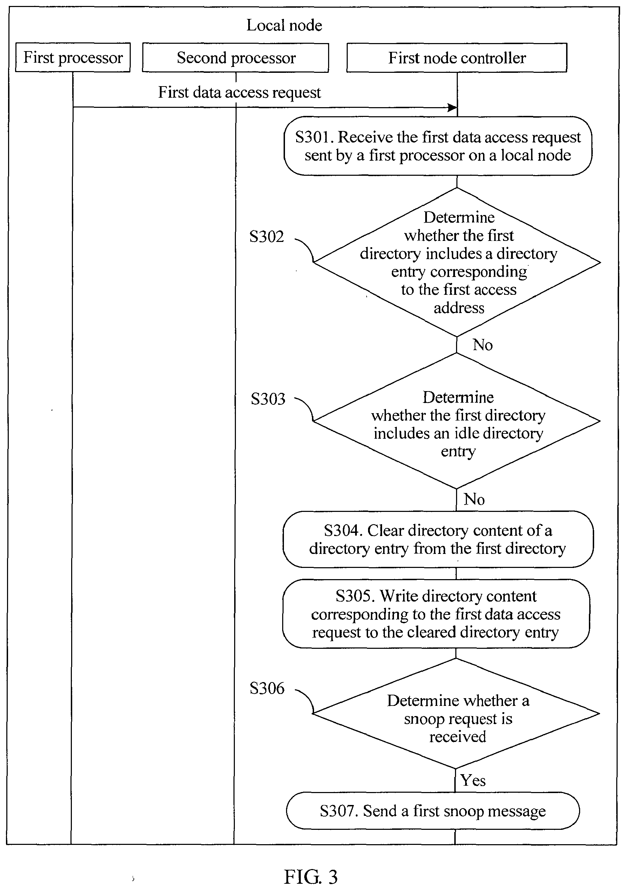

As shown in FIG. 3, a directory management method is provided in this embodiment of the present invention. The method is applied to a multiprocessor system. The multiprocessor system includes a local node and at least one remote node. A processor cache shared network is formed by using a data path between the local node and the remote node. The local node includes a first node controller NC, at least one processor, and a first directory. The first directory is used to record directory content of memory data that is of another remote node and that is cached in the processor on the local node. As shown in FIG. 1, the method includes:
S301. The first NC receives a first data access request sent by a first processor on the local node, where the first data access request is used to instruct to cache memory data corresponding to a first access address on the remote node, and the first processor is any processor on the local node.
S302. The first NC determines whether the first directory includes a directory entry corresponding to the first access address.
S303. If the first NC determines that the first directory does not include a directory entry corresponding to the first access address, the first NC determines whether the first directory includes an idle directory entry.
S304. When the first NC determines that the first directory does not include an idle directory entry, the first NC clears directory content of a directory entry from the first directory.
S305. The first NC writes directory content corresponding to the first data access request to the cleared directory entry.
S306. The first NC determines whether a first snoop request is received, where the first snoop request is used to instruct the first NC to clear, from the local node, memory data corresponding to a second data access address.
S307. If the first NC determines that a first snoop request is received, the first NC sends a first snoop message to the processor on the local node, where the first snoop message is used to clear the memory data corresponding to the second data access address, and the memory data corresponding to the second data access address is cached in the processor on the local node.

According to the directory management method provided in this embodiment of the present invention, when a first data access request sent by a first processor on a local node is received, and it is determined that a first directory does not include a directory entry corresponding to a first access address and the first directory does not include an idle directory entry, the first NC clears directory content of a directory entry from the first directory, and writes directory content corresponding to the first data access request to the cleared directory entry. According to the method provided in this embodiment of the present invention, utilization of the first directory is effectively improved without changing a capacity of the first directory, and in addition, after the directory content of the selected directory entry is cleared, the first NC of the local node does not directly delete memory data that is indicated by an access address, where the access address is indicated by the directory content of the selected directory entry; instead, the first NC deletes, after receiving a first snoop request, the memory data indicated by the directory content of the selected directory entry. That is, when the directory content of the selected directory entry is deleted, the first NC does not immediately delete the memory data indicated by the directory content of the selected directory entry. Therefore, when the directory content of the memory data is cleared from the first NC, a processor in which the memory data indicated by the directory content of the selected directory entry is cached can continuously use the memory data before the first NC receives the first snoop request, so that when the processor uses the memory data, forced program interruption caused by forced deletion of the memory data is avoided, and impact caused by an overflow of the first directory to processor performance can be reduced.

Specifically, a node on which a first node controller is located is a local node. A quantity of processors on the local node is not limited in this embodiment of the present invention. There is at least one processor on the local node in this embodiment of the present invention.

A first data access request is sent by any processor on the local node. Because a processing manner and principle of sending a data access request by each processor are the same, in this embodiment of the present invention, only a first processor is used as an example for description. This does not have any indicative meaning.

The first directory may be set inside the first node controller, or may set outside the first node controller. Preferably, the first directory may be set outside the first node controller, so that a system running rate can be improved.

In this embodiment of the present invention, when the first NC selects a to-be-cleared directory entry, a preset directory replacement policy may be used to select the directory that needs to be cleared. This is not limited in this embodiment of the present invention. The directory entry that needs to be cleared can be selected and set according to a requirement; certainly, the directory entry that needs to be cleared can be selected in a first directory in another manner, provided that it can be ensured that when the first directory does not include an idle directory entry, the method can be used to clear content of a directory entry from the first directory, so as to record directory content of a first data access request. The preset directory replacement policy is not limited in this embodiment of the present invention. A corresponding preset directory replacement policy in the prior art can be selected according to a requirement, for example, the directory replacement policy described above can be used.

In this embodiment of the present invention, an idle directory entry means that no directory content is recorded in the directory entry, or that the directory entry is not occupied.

A manner of determining whether the first directory includes an idle directory entry in step S303 is not limited in this embodiment of the present invention. For example, whether the first directory includes an idle directory entry can be determined in the following manner.
S3031. Obtain a total quantity of directory entries in the first directory and a quantity of directory entries that are already used.
S3032. If the quantity of directory entries that are already used is equal to the total quantity of directory entries in the first directory, determine that the first directory does not include an idle directory entry.

A manner of creating directory content corresponding to the first data access request in the first directory is the same as a manner in the prior art, and details are not described in this embodiment of the present invention again.

The directory content corresponding to the first data access request includes an access type of the first data access request and that the memory data corresponding to the target access address is cached in the first processor.

The first data access request carries a first access address and an access type. The access type is not limited in this embodiment of the present invention. For example, the first data access request may be a shared request, or may be an exclusive request.

A manner of clearing directory content of a directory entry from the first directory by the first NC in step S 104 is not limited in this embodiment of the present invention. Specifically, the first NC can select a to-be-cleared directory entry in the first directory by using a replacement policy in the prior art.

It should be noted that, if it is determined that the first directory includes an idle directory entry, for a manner of creating directory content corresponding to the first data access request in the idle directory entry, reference may be made to the prior art. Details are not described in this embodiment of the present invention again.

Because there are various requesters in the multiprocessor system that send first snoop requests to the first NC, the requesters of the first snoop requests received by the first NC are different, and an object of a first snoop message is sent to a processor on the local node according to different first NCs. This is not limited in this embodiment of the present invention. For example, in this embodiment of the present invention, a requester that sends a first snoop request to the first NC may be any processor on the local node, or may be any remote node. The following gives separate descriptions.

In one possible implementation manner, when a requester that sends the first snoop request to the first NC is a first remote node, because a manner and principle of sending a first snoop request to the first NC by all other remote nodes are the same as a manner and principle of sending a first snoop request to the first NC by the first remote node, in this embodiment of the present invention, only the first remote node is used as an example for description. This does not have any indicative meaning.

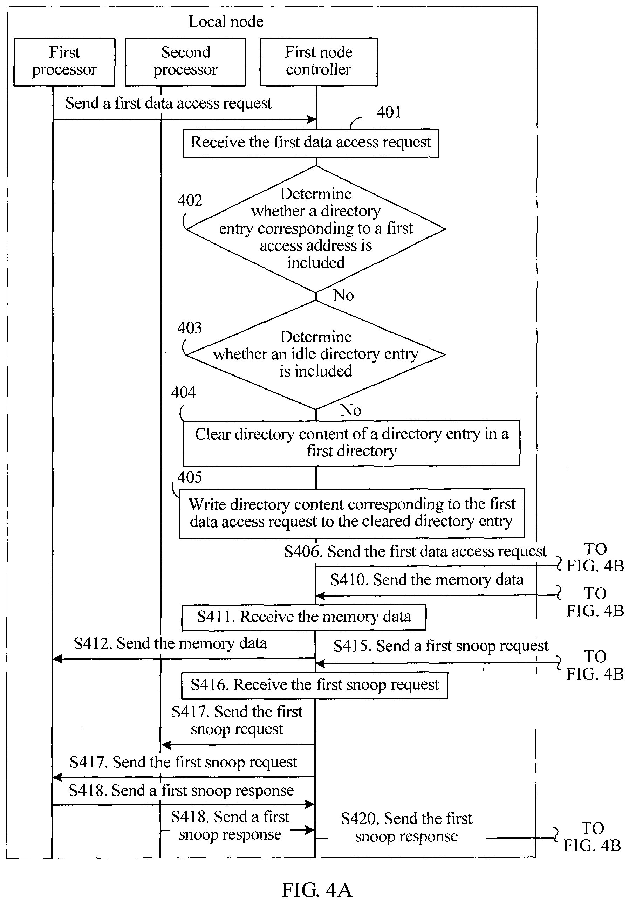

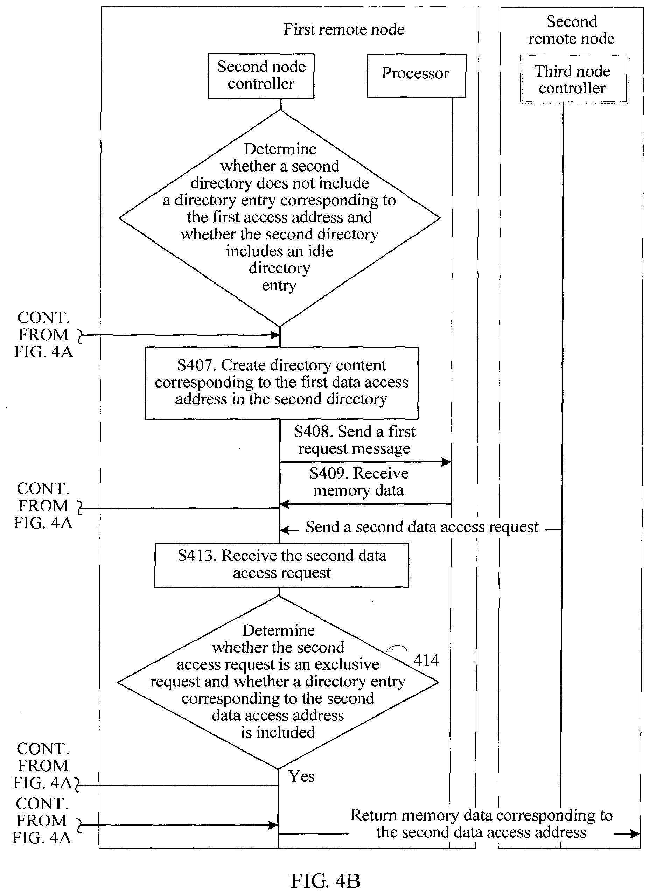

As shown in FIG. 4A to FIG. 4B, FIG. 4A to FIG. 4B are a directory management method according to an embodiment of the present invention.
S401. The first NC receives a first data access request sent by a first processor on a local node, where the first data access request is used to instruct to cache memory data corresponding to a first access address on the remote node, and the first processor is any processor on the local node.
The first data access request carries a first access address and an access type. For example, the first access address is an address A, and the access type is a shared request. When an access type of a data access request is a shared request, and memory data corresponding to the address A is cached in the processor, an NC of a node on which the processor is located records a state of the memory data as a shared state in an RD. It can be learned that when a type of a data access request is an exclusive request, directory content of the memory data in the directory entry should be in an exclusive state.
S402. The first NC determines whether the first directory includes a directory entry corresponding to the first access address.
Specifically, the first NC can search, by using an access address as an index, the first directory on a node controller to determine whether a directory entry corresponding to the first access address is included. A directory of the node controller may be located inside the node controller, or may be located outside the node controller. This is not limited in the present invention.
A manner of storing a directory entry in the first directory is not limited in this embodiment of the present invention. The directory entry in the first directory may be stored in a form of a table, as shown in FIG. 1, or may be stored in another form, provided that first NC can search the first directory according to the first access address. For example, as shown in Table. 1, Table. 1 shows a manner of storing a directory entry in a form of a table.

**Table 1 Directory entries in the first directory**

| | |
|---|---|
| **Address A** | Memory data corresponding to the address A is cached in a processor A, and a cache state is an exclusive state |
| **Address B** | Memory data corresponding to the address B is cached in the processor A, and a cache state is a shared state |
| **Address C** | Memory data corresponding to the address C is cached in a processor B and a processor C, and a cache state is a shared state |

S403. If the first NC determines that the first directory does not include a directory entry corresponding to the first access address, the first NC determines whether the first directory includes an idle directory entry.
A manner of determining whether an idle directory entry is included is described above, and details are not described in this embodiment of the present invention again.
S404. When the first NC determines that the first directory does not include an idle directory entry, the first NC clears directory content of a directory entry from the first directory.
S405. The first NC writes directory content corresponding to the first data access request to the cleared directory entry, where the directory content corresponding to the first data access request is used to indicate that the memory data corresponding to the first access address in the first processor is cached on the local node; and S406 is performed.
S406. The first NC sends the first data access request to the second NC.
S407. When the second NC determines, according to the first data access request, that the second directory does not include directory content corresponding to the first access address, and the second directory includes an idle directory entry, the second NC creates directory content corresponding to the first access address in the second directory, where the directory content corresponding to the first access address is used to indicate that the memory data corresponding to the first access address is cached on the local node.
S408. The second NC sends, according to the first access address, a first request message to a processor in which the memory data corresponding to the first access address is located, where the first request message is used to instruct the processor in which the memory data corresponding to the first access address is located to return the memory data corresponding to the first access address.
S409. The second NC receives the memory data corresponding to the first access address that is returned by the processor in which the memory data corresponding to the first access address is located.
S410. The second NC returns the memory data corresponding to the first access address to the first NC.
S411. The first NC receives the memory data corresponding to the first access address sent by the second NC.
S412. The first NC sends the memory data corresponding to the first access address to the first processor.
S413. The second NC receives a second data access request sent by a second remote node, where the second data access request carries a second data access address and an access type.
S414. The second NC determines whether the access type of the second data access request is an exclusive request and whether the second directory includes a directory entry corresponding to the second data access address.
S415. If the second NC determines that the access type of the second data access request is an exclusive request, the second directory includes a directory entry corresponding to the second data access address, and the directory entry indicates that memory data corresponding to the second data access address is in a shared state, the second NC sends a first snoop request to the first NC, where the first snoop request is used to instruct the first NC to clear the memory data corresponding to the second data access address; and in addition, the second NC sends the first request message to a processor in which the memory data corresponding to the second data access address is located, where the first request message is used to instruct the processor to return the memory data corresponding to the second data access address.
S416. The first NC receives the first snoop request.
S417. The first NC sends a first snoop message to each processor on the local node, where the first snoop message is used to instruct to clear the memory data corresponding to the second data access address.
S418. The first NC receives a first snoop response sent by each processor on the local node.
S419. The first NC determines whether the first snoop response sent by each processor on the local node is received.
S420. If the first NC determines that the first snoop response sent by each processor on the local node is received, the first NC sends the first snoop response to the second NC.
S421. After receiving the first snoop response, the second NC returns the memory data corresponding to the second data access address to the second remote node, and creates directory content corresponding to the second data access address in the second directory, where the directory content is used to indicate that the memory data corresponding to the second data access address is cached on the second remote node.

When the foregoing directory management method is used, utilization of the directory can be effectively improved without changing a capacity of a directory memory, and impact caused by a forced replacement of memory data to processor performance can be avoided.

According to the directory management method provided in this embodiment of the present invention, when a first data access request sent by a first processor on a local node is received, and it is determined that a first directory does not include a directory entry corresponding to a first access address and the first directory does not include an idle directory entry, the first NC clears directory content of a directory entry from the first directory, and writes directory content corresponding to the first data access request to the cleared directory entry. According to the method provided in this embodiment of the present invention, utilization of the first directory is effectively improved without changing a capacity of the first directory, and in addition, after the directory content of the selected directory entry is cleared, the first NC of the local node does not directly delete memory data that is indicated by an access address, where the access address is indicated by the directory content of the selected directory entry; instead, when receiving a second data access request, a second NC determines whether a first snoop request needs to be sent to the first NC, and after the second NC determines that the first snoop request needs to be sent to the first NC, the first NC deletes, after receiving the first snoop request, the memory data indicated by the directory content of the selected directory entry. That is, when the directory content of the selected directory entry is deleted, the first NC does not immediately delete the memory data indicated by the directory content of the selected directory entry. Therefore, when the directory content of the memory data is cleared from the first NC, a processor in which the memory data indicated by the directory content of the selected directory entry is cached can continuously use the memory data before the first NC receives the first snoop request, so that when the processor uses the memory data, forced program interruption caused by forced deletion of the memory data is avoided, and impact caused by an overflow of the first directory to processor performance can be reduced.

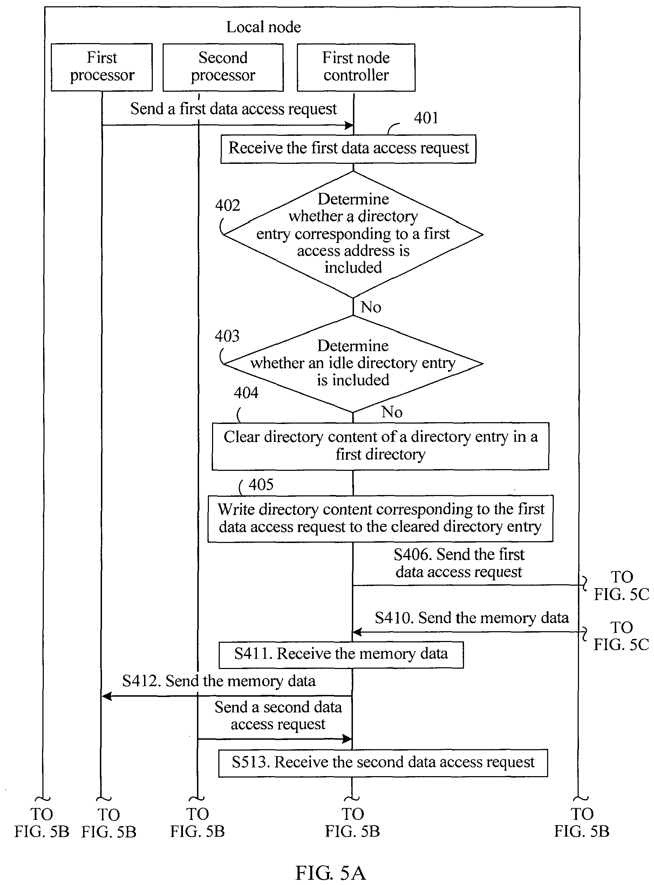

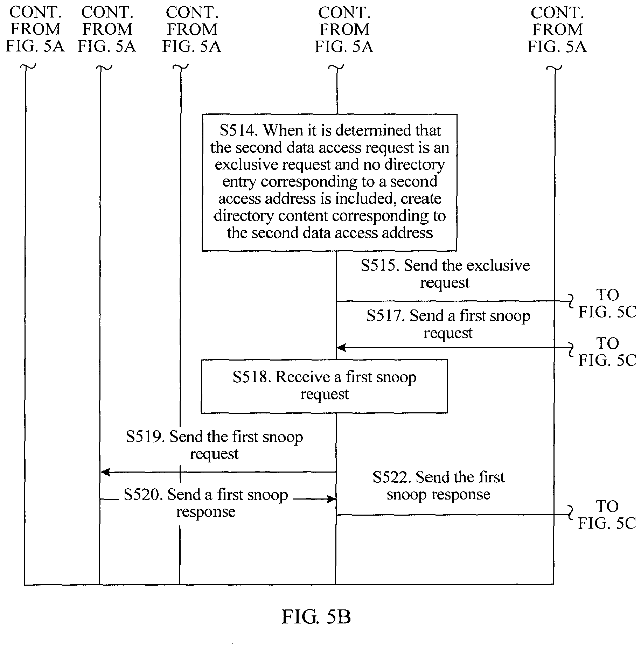

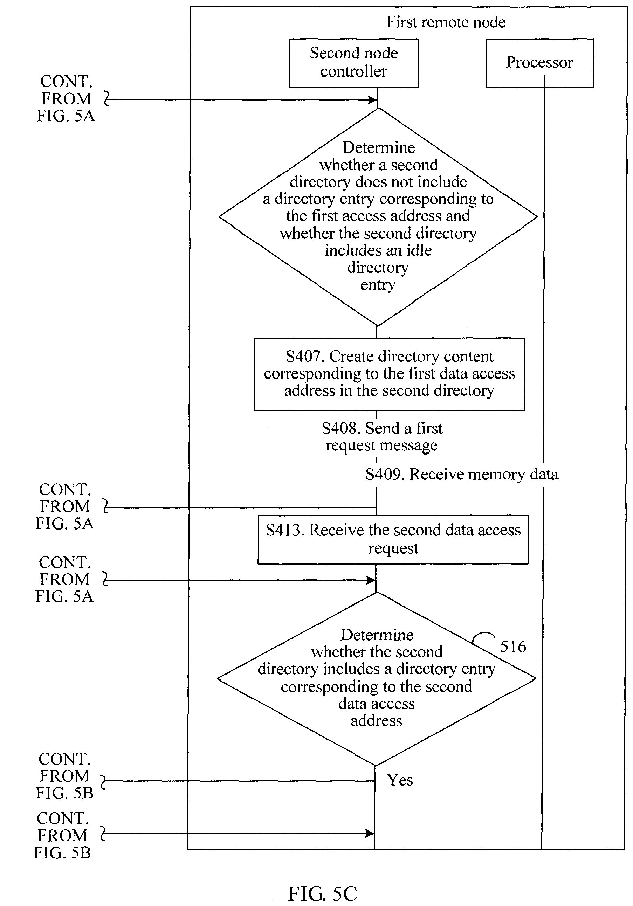

In another possible implementation manner, as shown in FIG. 5A to FIG. 5C, FIG. 5A to FIG. 5C are another application scenario of another directory management method according to an embodiment of the present invention. A difference from the method shown in FIG. 4A to FIG. 4B is as follows: In this embodiment of the present invention, the first NC determines, according to the second data access request sent by a second processor on the local node, whether to send the first snoop message to the second NC, and after step S412 is performed in the embodiment shown in FIG. 4A, the embodiment shown in FIG. 5A to FIG. 5C further includes steps S513 to S523, for example:
S513. The first NC receives a second data access request sent by a second processor on the local node, where the second data access request carries a second data access address and an access type.
S514. If the first NC determines that the access type of the second data access request is an exclusive request and whether the first directory does not include a directory entry corresponding to the second data access address, the first NC selects an idle directory entry in the first directory to record directory content corresponding to the second data access request, and sends the exclusive request to the first remote node, and in addition, step S515 is performed.
   The first remote node is determined by the first NC according to memory data corresponding to the second data access address, that is, the first remote node is a specific remote node on which the memory data is located. The exclusive request is used to indicate that the memory data can be cached in only one processor.
S515. Send the exclusive request to the first remote node, where the exclusive request is used to instruct to: when a second NC of the first remote node determines that the second directory includes a directory entry corresponding to the second data access address, and directory content of the directory entry indicates that memory data corresponding to the second data access address is cached on the local node, send a first snoop request to the local node.
   The first remote node is a remote node on which the memory data corresponding to the second data access address is located.
   The second directory is a directory managed by the second NC of the first remote node, and the second directory is used to record a status of memory data that is of the remote node and that is cached on the local node.
S516. After receiving the exclusive request, the second NC determines whether the second directory includes a directory entry corresponding to the second data access address.
S517. When the second NC determines that the second directory includes a directory entry corresponding to the second data access address, and directory content of the directory entry indicates that a state of memory data corresponding the second data access address is a shared state, the second NC sends a first snoop request to the first NC, where the first snoop request is used to instruct the first NC to clear the memory data corresponding to the second data access address; and in addition, the second NC sends a first request message to a processor in which the memory data corresponding to the second data access address is located, where the first request message is used to instruct the processor to return the memory data corresponding to the second data access address.
S518. The first NC receives the first snoop request.
S519. The first NC sends the first snoop message to each processor on the local node other than the second processor, where the first snoop message is used to instruct to clear the memory data corresponding to the second data access address.
   In this solution, a requester that sends the first snoop request to the first NC is the second processor. Therefore, the first NC sends the first snoop message to each processor on the local node other than the second processor.
   It should be noted that, in this embodiment of the present invention, a first processor and a second processor may be a same processor, or may be different processors. This is not limited in this embodiment of the present invention.
S520. The first NC receives a first snoop response sent by each processor on the local node other than the second processor, where the first snoop response is used to indicate that the memory data corresponding to the second data access address is cleared.
S521. The first NC determines whether the first snoop response sent by each processor on the local node other than the second processor is received.
S522. If the first NC determines that the first snoop response sent by each processor on the local node other than the second processor is received, the first NC sends the snoop response to the second NC.
S523. After receiving the first snoop response, the second NC returns the memory data corresponding to the second data access address to the first remote node, and updates directory content corresponding to the second data access address in the second directory, where the directory content is used to indicate that the memory data corresponding to the second data access address is cached on the first remote node, and a state is an exclusive state.

When the manner provided in this embodiment is used, after step S514 is performed, the directory content corresponding to the second data access address in the first directory indicates that the memory data corresponding to the second data access address is cached in the second processor, and the directory content that is corresponding to the second data access address in the first directory and that is in the first directory is updated.

According to the directory management method provided in this embodiment of the present invention, when a first data access request sent by a first processor on a local node is received, and it is determined that a first directory does not include a directory entry corresponding to a first access address and the first directory does not include an idle directory entry, the first NC clears directory content of a directory entry from the first directory, and writes directory content corresponding to the first data access request to the cleared directory entry. According to the method provided in this embodiment of the present invention, utilization of the first directory is effectively improved without changing a capacity of the first directory, and in addition, after the directory content of the selected directory entry is cleared, the first NC of the local node does not directly delete memory data that is indicated by an access address, where the access address is indicated by the directory content of the selected directory entry; instead, the first NC deletes memory data according to an access type and a second data access address that are of a second data access request sent by a second processor. The first NC sends the second data access request to a second NC. The second NC determines, according to the access type of the second data access request, whether a first snoop request needs to be sent to the first NC. After the second NC determines that the first snoop request needs to be sent to the first NC, and the first NC deletes, after receiving the first snoop request, the memory data indicated by the directory content of the selected directory entry. That is, when the directory content of the selected directory entry is deleted, the first NC does not immediately delete the memory data indicated by the directory content of the selected directory entry. Therefore, when the directory content of the memory data is cleared from the first NC, a processor in which the memory data indicated by the directory content of the selected directory entry is cached can continuously use the memory data before the first NC receives the first snoop request, so that when the processor uses the memory data, forced program interruption caused by forced deletion of the memory data is avoided, and impact caused by an overflow of the first directory to processor performance can be reduced.

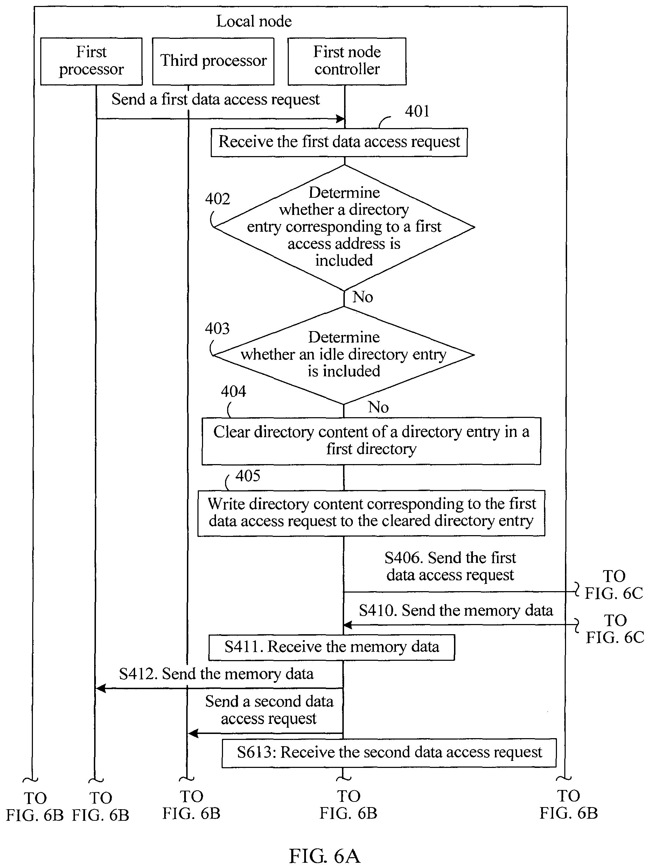

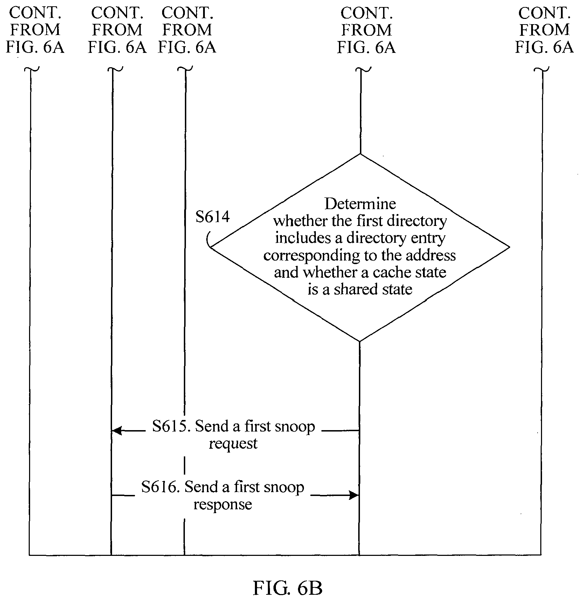

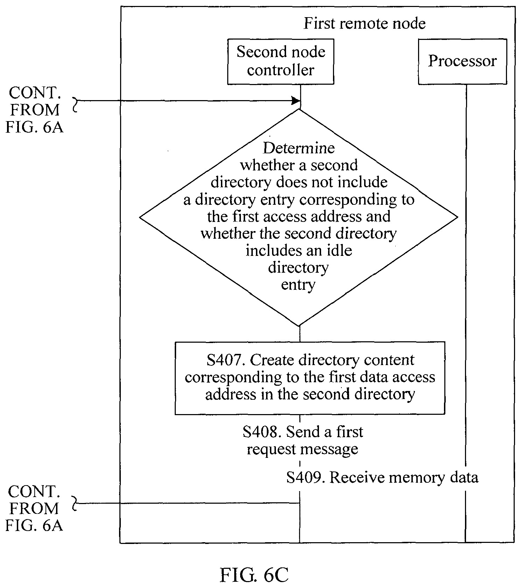

In a third possible implementation manner, as shown in FIG. 6A to FIG. 6C, a difference between FIG. 6A to FIG. 6C and FIG. 4A to FIG. 4B is that a requester of the first snoop request is any processor on the local node. Because a manner and principle of triggering the first NC by all processors on the local node to send the first snoop message are the same, in this embodiment of the present invention, only a third processor is used as an example for description. This does not have any indicative meaning. A difference from the method shown in FIG. 4A to FIG. 4B is as follows: After step S412 shown in FIG. 4A is performed, the method further includes steps S613 to S617.
S613. The first NC receives a second data access request sent by a third processor on the local node, where the second data access request includes a second data access address and an access type.
S614. The first NC determines whether the second data access request is an exclusive request, whether the first directory includes directory content corresponding to the second data access address and whether memory data corresponding to the second data access address in the directory content is in a shared state.
   Whether the first directory includes directory content corresponding to the second data access address can be determined by searching the first directory by using the second data access address. If the directory content cannot be found by means of searching, it is determined that no directory content corresponding to the second data access address is included; or if the directory content can be found by means of searching, it is determined that directory content corresponding to the second data access address is included.
S615. If it is determined that the second data access request is an exclusive request, the first directory includes directory content corresponding to the second data access address, and the directory content indicates that the memory data corresponding to the second data access address is in a shared state, the first NC sends the first snoop message to each processor on the local node other than the third processor.
S616. The first NC receives a first snoop response sent by each processor on the local node other than the third processor.
S617. The first NC creates directory content corresponding to the second data access request in an idle directory entry in the first directory, where the directory content is used to indicate that the second data access address is cached in the third processor, and a cache state is an exclusive state.

Certainly, after step S617 is performed, step S618 may further be included: The first NC sends a first request message to the second NC, where the first request message is used to instruct the second NC to update a state of the second data access address in the directory content corresponding to the second data access address to an exclusive state.

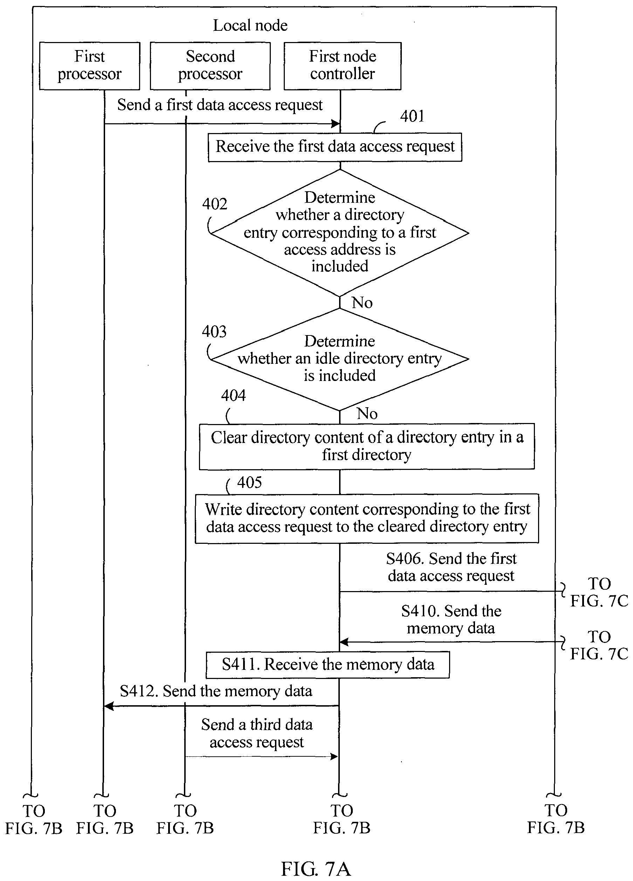

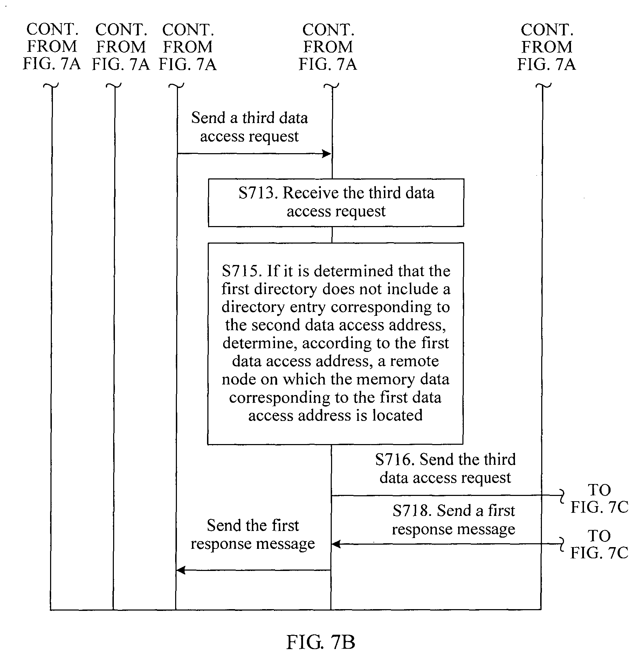

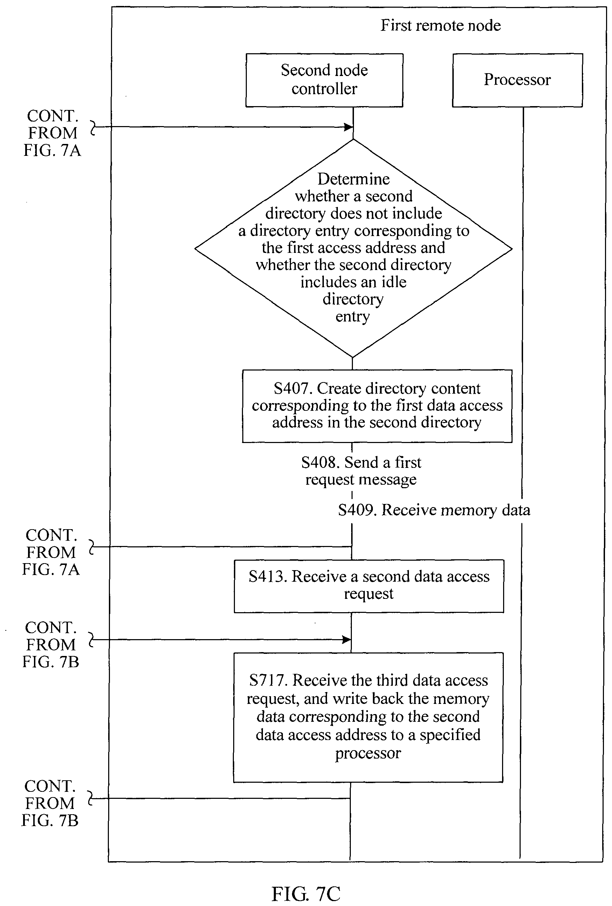

In a fourth possible implementation manner, as shown in FIG. 7A to FIG. 7C, a difference between FIG. 7A to FIG. 7C and FIG. 4A to FIG. 4B is as follows: After step S412 is performed, the method in this embodiment of the present invention further includes:
S713. The first NC receives a third data access request sent by a second processor, where the third data access request is used to write back memory data corresponding to a second data access address.
S714. The first NC determines whether the first directory includes a directory entry corresponding to the second data access address.
S715. If the first NC determines that the first directory does not include a directory entry corresponding to the second data access address, the first NC determines, according to the second data access address, a remote node on which the memory data corresponding to the second data access address is located, that is, a first remote node.
S716. The first NC sends the third data access request to the first remote node, so that a second NC of the first remote node writes back, according to the third data access request, the memory data corresponding to the second data access address to the processor in which the memory data corresponding to the second data access address is located, and clears, from the second directory, directory content corresponding to the second data access address.
S717. The second NC receives the third data access request, writes back the memory data to the processor in which the memory data corresponding to the second data access address is located, and clears, from the second directory, the directory content corresponding to the second data access address.
S718. The second NC sends a first response message to the first NC, where the first response message is used to indicate that the second directory managed by the second NC does not include memory data corresponding to the second data access address.

When the foregoing possible implementation manner is used, neither the first directory nor the second directory includes directory content corresponding to the second data access address.

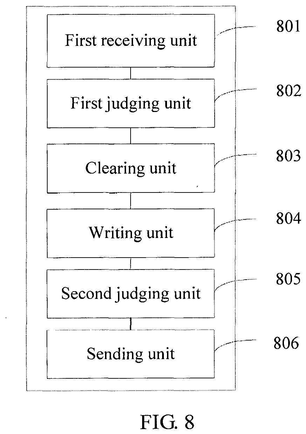

An embodiment of the present invention further provides a node controller. As shown in FIG. 8, the node controller includes:
a first receiving unit 801, configured to receive a first data access request sent by a first processor on the local node, where the first data access request is used to instruct to cache memory data corresponding to a first access address on the remote node, and the first processor is any processor on the local node;
a first judging unit 802, configured to: when it is determined that the first directory does not include a directory entry corresponding to the first access address, determine whether the first directory includes an idle directory entry;
a clearing unit 803, configured to: when the first judging unit determines that the first directory does not include an idle directory entry, clear directory content of a directory entry from the first directory;
a writing unit 804, configured to write directory content corresponding to the first data access request to the cleared directory entry;
a second judging unit 805, configured to determine whether a first snoop request is received; and
a sending unit 806, configured to: when the second judging unit determines that the first snoop request is received, send a first snoop message to the processor on the local node, where the first snoop message is used to clear memory data corresponding to the second data access address, the first snoop request is used to instruct the first NC to clear, from the local node, the memory data corresponding to the second data access address, and the memory data corresponding to the second data access address is cached in the processor on the local node.

According to the node controller provided in this embodiment of the present invention, when a first data access request sent by a first processor on a local node is received, and it is determined that a first directory does not include a directory entry corresponding to a first access address and the first directory does not include an idle directory entry, the first NC clears directory content of a directory entry from the first directory, and writes directory content corresponding to the first data access request to the cleared directory entry. According to the method provided in this embodiment of the present invention, utilization of the first directory is effectively improved without changing a capacity of the first directory, and in addition, after the directory content of the selected directory entry is cleared, the first NC of the local node does not directly delete memory data that is indicated by an access address, where the access address is indicated by the directory content of the selected directory entry; instead, the first NC deletes, after receiving a first snoop request, the memory data indicated by the directory content of the selected directory entry. That is, when the directory content of the selected directory entry is deleted, the first NC does not immediately delete the memory data indicated by the directory content of the selected directory entry. Therefore, when the directory content of the memory data is cleared from the first NC, a processor in which the memory data indicated by the directory content of the selected directory entry is cached can continuously use the memory data before the first NC receives the first snoop request, so that when the processor uses the memory data, forced program interruption caused by forced deletion of the memory data is avoided, and impact caused by an overflow of the first directory to processor performance can be reduced.

Further, optionally, the first snoop request is sent by a first remote node; the first remote node is a remote node on which the memory data corresponding to the second data access address is located, directory content corresponding to the second data access address is included in a directory of the first remote node, and the directory content is used to indicate that the memory data corresponding to the second data access address is cached on the local node.

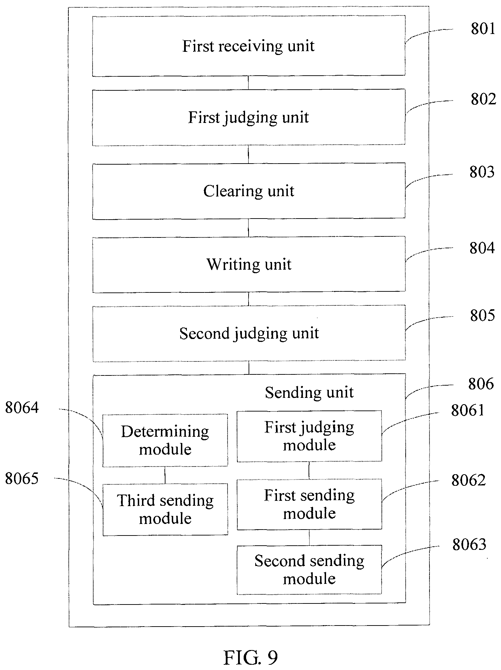

As shown in FIG. 9, the sending unit 806 includes:
a first judging module 8061, configured to determine whether the first snoop request is received after the first NC sends a second data access request to the first remote node;
a first sending module 8062, configured to: when the first judging module determines that the first snoop request is received after the first NC sends a second data access request to the first remote node, send the first snoop message to each processor on the local node other than a second processor, where the second processor is a processor on the local node that sends the second data access request to the first NC; and
a second sending module 8063, configured to: when the first judging module determines that the first snoop request is not received after the first NC sends a second data access request to the first remote node, send the first snoop message to each processor on the local node.

Further, optionally, the node controller further includes:
a second receiving unit, configured to receive the second data access request sent by the second processor, where the second data access request carries a second data access address and an access type;
a third judging unit, configured to determine whether the second data access request is an exclusive request and whether the first directory does not include a directory entry corresponding to the second data access address; and
an execution unit, configured to: when the third judging unit determines that the second data access request is an exclusive request and the first directory does not include a directory entry corresponding to the second data access address, select an idle directory entry in the first directory to record directory content corresponding to the second data access request, and send the exclusive request to the first remote node, where the exclusive request is used to instruct to: when an NC of the first remote node determines that a second directory includes a directory entry corresponding to the second data access address, and directory content of the directory entry indicates that the memory data corresponding to the second data access address is cached on the local node, send the first snoop request to the local node, where the second directory is a directory managed by the NC of the first remote node, and the second directory is used to record a status of memory data that is of the remote node and that is cached on the local node.

Further, optionally, the second judging unit 805 includes:
a receiving module, configured to receive a second data access request sent by a third processor on the local node, where the second data access request includes a second data access address and an access type;
a second judging module, configured to determine whether the second data access request is an exclusive request and whether the first directory includes directory content corresponding to the second data access address; and
a determining module, configured to: when the second judging module determines that the second data access request is an exclusive request, the first directory includes directory content corresponding to the second data access address, and the directory content indicates that the memory data corresponding to the second data access address is in a shared state, determine that the first snoop request is received.

Further, optionally, as shown in FIG. 9, the sending unit 806 includes:
a determining module 8064, configured to determine, according to the directory content corresponding to the second data access address in the first directory, a processor that is on the local node and that caches the memory data corresponding to the second data access address; and
a third sending module 8065, configured to send the first snoop message to each processor that is on the local node and that caches the memory data corresponding to the second data access address.

Further, optionally, the node controller further includes:
a third receiving unit, configured to receive a third data access request sent by a second processor, where the third data access request is used to write back the memory data corresponding to the second data access address; where
the sending unit is further configured to send the third data access request to a first remote node, so that the first remote node writes back, according to the third data access request, the memory data corresponding to the second data access address to a processor in which the memory data corresponding to the second data access address is located, and clear, from a second directory, directory content corresponding to the second data access address.

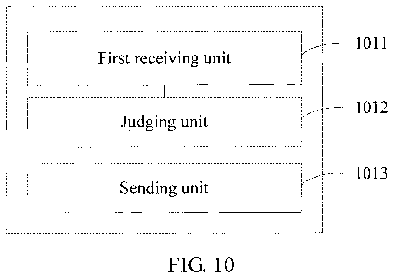

An embodiment of the present invention further provides a node controller. As shown in FIG. 10, the node controller includes:
a first receiving unit 1011, configured to receive a second data access request, where the first data access request carries a first access address and an access type;
a judging unit 1012, configured to determine whether the second data access request is an exclusive request, whether the first directory includes directory content corresponding to the first access address and whether the directory content corresponding to the first access address indicates that memory data corresponding to the first access address is in a shared state; and
a sending unit 1013, configured to: if the judging unit determines that the second data access request is an exclusive request, the first directory includes directory content corresponding to the first access address, and the directory content corresponding to the second data access address indicates that the memory data corresponding to the second data access address is in a shared state, send a first snoop request to a local node on which the memory data corresponding to the second data access address is cached, where the first snoop request is used to instruct a first NC to clear, from the local node, the memory data corresponding to the second data access address.

Further, optionally, the node controller further includes a second receiving unit and a clearing unit.

The second receiving unit is configured to receive a third data access request sent by the local node, where the third data access request is used to write back the memory data corresponding to the second data access address.

The judging unit is further configured to determine whether the second directory includes directory content corresponding to the second data access address.

The clearing unit is configured to: when the judging unit determines that the second directory includes directory content corresponding to the second data access address, clear, from the second directory, the directory content corresponding to the second data access address, and write back the memory data corresponding to the second data access address to a first processor, where the first processor is a processor in which the memory data corresponding to the second data access address is located.

An embodiment of the present invention further provides a multiprocessor system. The multiprocessor system includes a local node and at least one remote node. A node controller of the local node is the node controller shown in FIG. 8 and FIG. 9 in the embodiment of the present invention, and a node controller of the remote node is the node controller shown in FIG. 10.

The node controller of the local node is configured to:
receive a first data access request sent by a first processor on the local node, where the first data access request is used to instruct to cache memory data corresponding to a first access address on the remote node, and the first processor is any processor on the local node;
if it is determined that the first directory does not include a directory entry corresponding to the first access address, and the first directory does not include an idle directory entry, clear directory content of a directory entry from the first directory;
write directory content corresponding to the first data access request to the cleared directory entry; and
if it is determined that a first snoop request is received, send a first snoop message to the processor on the local node, where the first snoop message is used to clear memory data corresponding to the second data access address, the first snoop request is used to instruct to clear, from the local node, the memory data corresponding to the second data access address, and the memory data corresponding to the second data access address is cached in the processor on the local node.

The node controller of the remote node is configured to:
receive a second data access request, where the second data access request carries a second data access address and an access type; and
if it is determined that the second data access request is an exclusive request, the second directory includes directory content corresponding to the second data access address, and the directory content corresponding to the second data access address indicates that memory data corresponding to the second data access address is in a shared state, send a first snoop request to the local node on which the memory data corresponding to the second data access address is cached, where the first snoop request is used to instruct the node controller of the local node to clear the memory data corresponding to the first access address on the local node.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, function units in the embodiments of the present invention may be integrated into one processing unit, or each of the units may exist alone physically, or two or more units are integrated into one unit. The integrated unit may be implemented in a form of a software function unit.

When the integrated unit is implemented in the form of a software function unit and sold or used as an independent product, the integrated unit may be stored in a computer-readable storage medium. Based on such an understanding, all or some of the technical solutions may be implemented in a form of a software product. The software product is stored in a storage medium and includes several instructions for instructing a computer device (which may be a personal computer, a server, or a network device) or a processor to perform all or some of the steps of the methods described in the embodiments of the present invention. The memory medium is a non-transitory (non-transitory) medium, and the medium includes a flash memory, a removable hard disk, a read-only memory, a random access memory, a magnetic disk, an optical disc, or the like that can store program code.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A directory management method, applied to a multiprocessor system, wherein the multiprocessor system comprises a local node and at least one remote node, a processor cache shared network is formed by using a data path between the local node and the remote node, the local node comprises a first node controller, NC, at least one processor, and a first directory, the first directory is used to record directory content of memory data that is of another remote node and that is cached in the processor on the local node, and the method comprises:
receiving, by the first NC, a first data access request sent by a first processor on the local node, wherein the first data access request is used to instruct to cache memory data corresponding to a first access address on the remote node, and the first processor is any processor on the local node;
if the first NC determines that the first directory does not comprise a directory entry corresponding to the first access address and the first directory does not comprise an idle directory entry, clearing, by the first NC, directory content of a directory entry from the first directory;
writing, by the first NC, directory content corresponding to the first data access request to the cleared directory entry; and
if the first NC determines that a first snoop request is received, sending, by the first NC, a first snoop message to the processor on the local node, wherein the first snoop message is used to clear memory data corresponding to a second data access address, the first snoop request is used to instruct the first NC to clear, from the local node, the memory data corresponding to the second data access address, and the memory data corresponding to the second data access address is cached in the processor on the local node.

2. The method according to claim 1, wherein the first snoop request is sent by a first remote node, the first remote node is a remote node on which the memory data corresponding to the second data access address is located, directory content corresponding to the second data access address is comprised in a directory of the first remote node, and the directory content is used to indicate that the memory data corresponding to the second data access address is cached on the local node; and
correspondingly, the sending, by the first NC, a first snoop message to the processor on the local node comprises:
if the first NC determines that the first snoop request is received after the first NC sends a second data access request to the first remote node, sending, by the first NC, the first snoop message to each processor on the local node other than a second processor, wherein the second processor is a processor on the local node that sends the second data access request to the first NC; or
if the first NC determines that the first snoop request is not received after the first NC sends a second data access request to the first remote node, sending, by the first NC, the first snoop message to each processor on the local node.

3. The method according to claim 2, wherein before it is determined that the first snoop request sent by the first remote node is received, the method further comprises:
receiving, by the first NC, the second data access request sent by the second processor, wherein the second data access request carries a second data access address and an access type; and
if it is determined that the second data access request is an exclusive request and the first directory does not comprise a directory entry corresponding to the second data access address, selecting, by the first NC, an idle directory entry in the first directory to record directory RD content corresponding to the second data access request, and sending the exclusive request to the first remote node, wherein the exclusive request is used to instruct to: when a second NC of the first remote node determines that a second directory comprises a directory entry corresponding to the second data access address, and directory content of the directory entry indicates that the memory data corresponding to the second data access address is cached on the local node, send the first snoop request to the local node, the second directory is a directory managed by the second NC of the first remote node, and the second directory is used to record a status of memory data that is of the remote node and that is cached on the local node.

4. The method according to claim 1, wherein the determining that a first snoop request is received comprises:
receiving, by the first NC, a second data access request sent by a third processor on the local node, wherein the second data access request comprises a second data access address and an access type; and
if the first NC determines that the second data access request is an exclusive request, the first directory comprises directory content corresponding to the second data access address, and the directory content indicates that the memory data corresponding to the second data access address is in a shared state, determining, by the first NC, that the first snoop request is received.

5. The method according to claim 4, wherein the sending, by the first NC, a first snoop message to the processor on the local node comprises:
determining, by the first NC according to the directory content corresponding to the second data access address in the first directory, a processor that is on the local node and that caches the memory data corresponding to the second data access address; and
sending, by the first NC, the first snoop message to each processor that is on the local node and that caches the memory data corresponding to the second data access address.

6. The method according to claim 1, wherein the method further comprises:
receiving, by the first NC, a third data access request sent by a second processor, wherein the third data access request is used to write back the memory data corresponding to the second data access address; and
sending, by the first NC, the third data access request to a first remote node, so that the first remote node writes back, according to the third data access request, the memory data corresponding to the second data access address to a processor in which the memory data corresponding to the second data access address is located, and clearing, from a second directory, directory content corresponding to the second data access address.

7. A directory management method, applied to a multiprocessor system, wherein the multiprocessor system comprises a local node and at least one remote node, a processor cache shared network is formed by using a data path between the local node and the remote node, the remote node comprises a second node controller, NC, and a second directory, the second directory is used to record a status of memory data that is of the remote node and that is cached on the local node, and the method comprises:
receiving, by the second NC, a second data access request, wherein the second data access request carries a second data access address and an access type; and
if the second NC determines that the second data access request is an exclusive request, the second directory comprises directory content corresponding to the second data access address, and the directory content corresponding to the second data access address indicates that memory data corresponding to the second data access address is in a shared state, sending, by the second NC, a first snoop request to the local node on which the memory data corresponding to the second data access address is cached, wherein the first snoop request is used to instruct a first NC to clear memory data corresponding to a first access address on the local node.

8. The method according to claim 7, wherein the method further comprises:
receiving, by the second NC, a third data access request sent by the local node, wherein the third data access request is used to write back the memory data corresponding to the second data access address; and
if the second NC determines that the second directory comprises directory content corresponding to the second data access address, clearing, by the second NC and from the second directory, the directory content corresponding to the second data access address, and writing back the memory data corresponding to the second data access address to a first processor, wherein the first processor is a processor in which the memory data corresponding to the second data access address is located.

9. A node controller, comprising:
a first receiving unit, configured to receive a first data access request sent by a first processor on a local node, wherein the first data access request is used to instruct to cache memory data corresponding to a first access address on a remote node, and the first processor is any processor on the local node;
a first judging unit, configured to: when it is determined that a first directory does not comprise a directory entry corresponding to the first access address, determine whether the first directory comprises an idle directory entry;
a clearing unit, configured to: when the first judging unit determines that the first directory does not comprise an idle directory entry, clear directory content of a directory entry from the first directory;
a writing unit, configured to write directory content corresponding to the first data access request to the cleared directory entry;
a second judging unit, configured to determine whether a first snoop request is received; and
a sending unit, configured to: when the second judging unit determines that the first snoop request is received, send a first snoop message to the processor on the local node, wherein the first snoop message is used to clear memory data corresponding to a second data access address, the first snoop request is used to instruct a first node controller, NC, to clear, from the local node, the memory data corresponding to the second data access address, and the memory data corresponding to the second data access address is cached in the processor on the local node.

10. The node controller according to claim 9, wherein the first snoop request is sent by a first remote node, the first remote node is a remote node on which the memory data corresponding to the second data access address is located, directory content corresponding to the second data access address is comprised in a directory of the first remote node, and the directory content is used to indicate that the memory data corresponding to the second data access address is cached on the local node, and
the sending unit comprises:
a first judging module, configured to determine whether the first snoop request is received after the first NC sends a second data access request to the first remote node;
a first sending module, configured to: when the first judging module determines that the first snoop request is received after the first NC sends a second data access request to the first remote node, send the first snoop message to each processor on the local node other than a second processor, wherein the second processor is a processor on the local node that sends the second data access request to the first NC; and
a second sending module, configured to: when the first judging module determines that the first snoop request is not received after the first NC sends a second data access request to the first remote node, send the first snoop message to each processor on the local node.

11. The node controller according to claim 10, wherein the node controller further comprises:
a second receiving unit, configured to receive the second data access request sent by the second processor, wherein the second data access request carries a second data access address and an access type;
a third judging unit, configured to determine whether the second data access request is an exclusive request and whether the first directory does not comprise a directory entry corresponding to the second data access address; and
an execution unit, configured to: when the third judging unit determines that the second data access request is an exclusive request and the first directory does not comprise a directory entry corresponding to the second data access address, select an idle directory entry in the first directory to record directory content corresponding to the second data access request, and send the exclusive request to the first remote node, wherein the exclusive request is used to instruct to: when an NC of the first remote node determines that a second directory comprises a directory entry corresponding to the second data access address, and directory content of the directory entry indicates that the memory data corresponding to the second data access address is cached on the local node, send the first snoop request to the local node, wherein the second directory is a directory managed by the NC of the first remote node, and the second directory is used to record a status of memory data that is of the remote node and that is cached on the local node.

12. The node controller according to claim 9, wherein the second judging unit comprises:
a receiving module, configured to receive a second data access request sent by a third processor on the local node, wherein the second data access request comprises a second data access address and an access type;
a second judging module, configured to determine whether the second data access request is an exclusive request and whether the first directory comprises directory content corresponding to the second data access address; and
a determining module, configured to: when the second judging module determines that the second data access request is an exclusive request, the first directory comprises directory content corresponding to the second data access address, and the directory content indicates that the memory data corresponding to the second data access address is in a shared state, determine that the first snoop request is received.

13. The node controller according to claim 12, wherein the sending unit comprises:
a determining module, configured to determine, according to the directory content corresponding to the second data access address in the first directory, a processor that is on the local node and that caches the memory data corresponding to the second data access address; and
a third sending module, configured to send the first snoop message to each processor that is on the local node and that caches the memory data corresponding to the second data access address.

14. The node controller according to claim 9, wherein the node controller further comprises:
a third receiving unit, configured to receive a third data access request sent by a second processor, wherein the third data access request is used to write back the memory data corresponding to the second data access address; wherein
the sending unit is further configured to send the third data access request to a first remote node, so that the first remote node writes back, according to the third data access request, the memory data corresponding to the second data access address to a processor in which the memory data corresponding to the second data access address is located, and clear, from a second directory, directory content corresponding to the second data access address.

15. A node controller, wherein the node controller comprises:
a first receiving unit, configured to receive a first data access request, wherein the first data access request carries a first access address and an access type;
a judging unit, configured to determine whether the second data access request is an exclusive request, whether a first directory comprises directory content corresponding to the first access address and whether the directory content corresponding to the first access address indicates that memory data corresponding to the first access address is in a shared state; and
a sending unit, configured to: if the judging unit determines that the second data access request is an exclusive request, the first directory comprises directory content corresponding to the first access address, and the directory content corresponding to the second data access address indicates that the memory data corresponding to the second data access address is in a shared state, send a first snoop request to a local node on which the memory data corresponding to the second data access address is cached, wherein the first snoop request is used to instruct a first node controller, NC, to clear, from the local node, the memory data corresponding to the second data access address.

16. The node controller according to claim 15, wherein the node controller further comprises:
a second receiving unit, configured to receive a third data access request sent by the local node, wherein the third data access request is used to write back the memory data corresponding to the second data access address; wherein
the judging unit is further configured to determine whether a second directory comprises directory content corresponding to the second data access address; and
a clearing unit, configured to: when the judging unit determines that the second directory comprises directory content corresponding to the second data access address, clear, from the second directory, the directory content corresponding to the second data access address, and write back the memory data corresponding to the second data access address to a first processor, wherein the first processor is a processor in which the memory data corresponding to the second data access address is located.

17. A multiprocessor system, wherein the multiprocessor system comprises a local node and at least one remote node, a node controller of the local node is the node controller according to any one of claims 9 to 14, and a node controller of the remote node is the node controller according to claim 15 or 16.
